# DEMANDE DE BREVET EUROPEEN

(11) **EP 0 685 292 A1**
(43) Date de publication de la demande: **06.12.1995**
(21) Numéro de dépôt: 95401193.8
(22) Date de dépôt: 22.05.1995
(51) Int. Cl.: B23K 26/06

(54) **Procédé et dispositif de travail au laser sur une surface métallique peu accessible**

(30) Priorité: 30.05.1994 FR 9406549
(71) Demandeur: FRAMATOME, 92400 Courbevoie (FR)
(72) Inventeur: Boudot, Cécile, F-71880 Chatenoy-le-Royal (FR); Vastra-Bobin, Isabelle, F-71200 Le Creusot (FR); Bobin, Vincent, F-71200 Le Creusot (FR); Dugny, Pierre Guy, F-71200 Le Creusot (FR)
(74) Mandataire: Bouget, Lucien

(57) **Abrégé**

Le faisceau laser (14) pénètre dans une zone (11) proche de la surface métallique (7) sur laquelle on réalise le travail au laser, en traversant une surface d'extrémité (15) de la fibre optique (10) sensiblement plane et inclinée d'un angle α non nul par rapport à un plan perpendiculaire à l'axe de la fibre optique (10). Le dispositif de travail au laser ne comporte pas de moyen optique de déviation du faisceau (14) à la sortie de la fibre (10). Le dispositif peut être réalisé sous la forme d'une tête (8) de travail au laser à l'intérieur d'un tube (7).

## Description

L'invention concerne un procédé et un dispositif de travail au laser sur une surface métallique peu accessible.

On connaît des procédés et dispositifs utilisant un faisceau laser pour réaliser un travail sur une surface métallique dans une zone peu accessible d'une installation, par exemple à l'intérieur d'un tube de faible diamètre.

Certains travaux réalisés au laser consistent à chauffer une partie d'une pièce métallique, par exemple pour réaliser son détensionnement à la suite d'une opération de déformation mécanique ou encore son traitement thermique.

On peut également utiliser un faisceau laser pour chauffer la surface d'une pièce métallique et fondre un matériau de revêtement, par exemple sous forme de fil ou de ruban pour recouvrir la surface métallique.

Dans le cas des installations nucléaires, on peut également utiliser un faisceau laser pour décontaminer une surface peu accessible, par exemple la surface intérieure d'un tube.

Dans le cas des réacteurs nucléaires refroidis par de l'eau et en particulier des réacteurs nucléaires refroidis par de l'eau sous pression, on a proposé de réaliser diverses opérations mettant en oeuvre un rayonnement laser, à l'intérieur des tubes des générateurs de vapeur du réacteur.

Les réacteurs nucléaires à eau sous pression comportent des générateurs de vapeur ayant un faisceau de plusieurs milliers de tubes de grande longueur et de faible diamètre, par exemple d'une longueur de l'ordre de 20 m et d'un diamètre de l'ordre de 20 mm. En outre, ces tubes, lorsqu'ils sont montés dans le générateur de vapeur, ne sont accessibles que par l'intérieur, de sorte que des traitements tels que le détensionnement thermique des parties cintrées des tubes qui sont éloignées des extrémités du tube nécessitent l'utilisation de dispositifs de traitement qui peuvent être introduits et déplacés à l'intérieur d'un tube. De tels traitements peuvent être réalisés par chauffage par un rayonnement laser de puissance.

Pour réaliser certaines opérations à l'intérieur d'un tube de générateur de vapeur, telles que le soudage d'un manchon de réparation à l'intérieur du tube, on a également proposé des procédés et dispositifs utilisant un rayonnement laser.

Le rayonnement laser produit par une source de puissance est guidé suivant un parcours optique entre la source et une zone proche de la surface métallique sur laquelle on effectue le travail. On a proposé le plus souvent de transporter le rayonnement laser à l'intérieur d'une fibre optique qui comporte une première extrémité d'entrée recevant le rayonnement de la source et une seconde extrémité de sortie située dans la zone voisine de la surface métallique sur laquelle on réalise le travail au laser. En effet, les fibres optiques présentent de très faibles diamètres et peuvent transporter un rayonnement laser d'une source de puissance sur des distances très importantes, de l'ordre de plusieurs dizaines ou plusieurs centaines de mètre. L'utilisation d'une fibre optique pour transporter le rayonnement laser est donc tout-à-fait indiquée dans le cas d'une surface peu accessible et/ou contaminée.

Le rayonnement laser pénètre dans la zone proche de la surface métallique, à l'extrémité de sortie de la fibre optique, sous la forme d'un faisceau qui doit être dirigé et éventuellement concentré sur la surface métallique. Dans la mesure où la fibre optique est généralement dirigée suivant la direction axiale du tube, il est nécessaire de renvoyer le faisceau laser ayant initialement une direction axiale en direction de la surface métallique constituée par la paroi interne du tube. Pour cela, on utilise généralement un miroir qui est disposé à proximité de l'extrémité de sortie de la fibre optique et qui est incliné par rapport à l'axe de la fibre optique et du tube, de manière à diriger le faisceau laser sur la surface à traiter.

Il peut être également nécessaire de concentrer le rayonnement sur une zone de faible dimension de la surface à traiter et, dans ce cas, on réalise une focalisation du faisceau par des moyens optiques tels que des lentilles.

On a également proposé d'utiliser des miroirs optiques concaves qui permettent à la fois de focaliser le faisceau et de le diriger vers la surface métallique sur laquelle on réalise le travail au laser.

Cependant, l'utilisation d'éléments optiques au voisinage de la zone dans laquelle on effectue le travail au laser peut présenter des inconvénients notables, dans la mesure où les surfaces optiques sont susceptibles de se recouvrir de métal provenant de la surface métallique dont on réalise le chauffage ou de particules de toute nature arrachées à la surface par le faisceau laser.

D'autre part, pour réaliser le balayage de la surface métallique lors du traitement, il est nécessaire de déplacer la fibre et les moyens optiques, par exemple en rotation et en translation à l'intérieur du tube.

Pendant ces déplacements, il est difficile d'obtenir un réglage efficace et précis du faisceau laser par les moyens optiques. La fibre et les moyens optiques sont montés à l'intérieur d'une tête de travail par faisceau laser qui est généralement reliée à un moyen souple de transmission d'une poussée et d'une traction sur la tête de travail au laser qui doit également être mise en rotation. La réalisation d'une telle tête de travail comportant une fibre et des moyens optiques de déflection et éventuellement de focalisation du faisceau laser demande les plus grands soins pour obtenir des conditions de travail reproductibles du faisceau laser à l'intérieur d'un tube.

En outre, les moyens optiques de la tête de travail au laser peuvent être exposés à des vapeurs métalliques ou à des salissures dans la zone de travail et peuvent être détruits par le rayonnement de puissance provenant de la source laser à travers la fibre optique.

Le but de l'invention est donc de proposer un procédé de travail au laser sur une surface métallique peu accessible consistant à faire passer un faisceau laser d'une source de rayonnement laser de puissance à une zone proche de la surface à traiter à l'intérieur d'une fibre optique et à diriger le faisceau laser sur la surface à traiter, ce procédé permettant d'éviter l'utilisation de moyens optiques pour diriger le faisceau vers la surface métallique sur laquelle on réalise le travail au laser.

Dans ce but, le faisceau laser pénètre dans la zone proche de la surface métallique en traversant une surface d'extrémité de la fibre optique sensiblement plane et inclinée d'un angle a non nul par rapport à un plan perpendiculaire à l'axe de la fibre optique.

L'invention est également relative à un dispositif de travail au laser sur une surface peu accessible comportant une source de rayonnement laser de puissance et une fibre optique ayant une extrémité d'entrée disposée pour recevoir un rayonnement laser de la source et une extrémité de sortie du rayonnement laser caractérisé par le fait que l'extrémité de sortie de la fibre optique est délimitée par une surface sensiblement plane, polie et inclinée d'un angle a non nul par rapport au plan perpendiculaire à l'axe de la fibre optique.

Afin de bien faire comprendre l'invention, on va maintenant décrire, à titre d'exemple non limitatif, en se référant aux figures jointes en annexe, un exemple de mise en oeuvre du procédé suivant l'invention et des dispositifs pour la mise en oeuvre de ce procédé comportant une tête de travail au laser à l'intérieur d'un tube de faible diamètre.

La figure 1 est une vue en coupe partielle d'une fibre optique utilisée dans la mise en oeuvre du procédé suivant l'invention.

La figure 2 est une vue en coupe axiale d'une tête de travail au laser d'un dispositif suivant l'invention et suivant un premier mode de réalisation.

La figure 3 est une vue en coupe axiale d'une tête de travail au laser d'un dispositif suivant l'invention et suivant un second mode de réalisation.

La figure 4 est une vue schématique d'un dispositif de travail au laser suivant l'invention ayant une tête rotative.

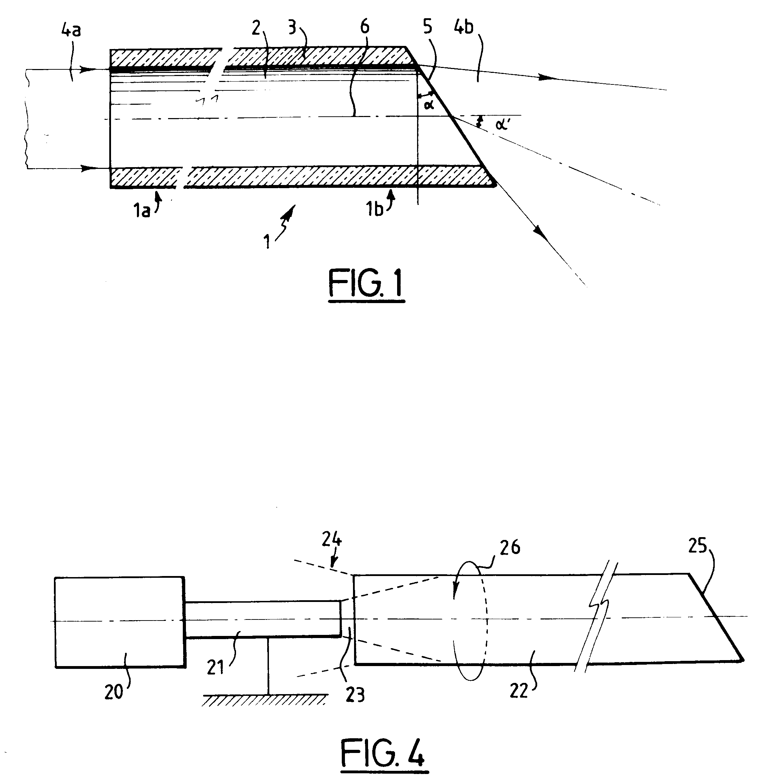

Sur la figure 1, on a représenté de manière très schématique la partie d'entrée la et la partie de sortie 1b d'une fibre optique 1 permettant de mettre en oeuvre le procédé suivant l'invention.

La fibre optique 1 comporte de manière habituelle un corps 2 en un matériau optique tel que la silice pure et une gaine 3. La fibre optique 1 peut présenter par exemple un diamètre de l'ordre de 1 mm.

L'extrémité d'entrée la de la fibre optique est reliée à une source de rayonnement laser de puissance, de manière à recevoir un faisceau laser 4a qui peut présenter une légère divergence, suivant l'ouverture numérique de la fibre 1 utilisée.

Généralement, l'angle maximal d'entrée du faisceau dans la fibre est de l'ordre de 25°.

Le faisceau 4a est guidé par la gaine 3 suivant toute la longueur de la fibre pour ressortir par l'extrémité de sortie de la partie 1b de la fibre sous la forme du faisceau 4b.

Pour la mise en oeuvre du procédé suivant l'invention, on utilise une fibre optique dont la surface d'extrémité de sortie 5, sensiblement plane, est inclinée d'un angle α par rapport à un plan transversal perpendiculaire à l'axe longitudinal 6 de la fibre.

La surface d'extrémité 5 de la fibre est parfaitement polie, de sorte que le dioptre plan traversé par le faisceau 4b à l'extrémité de sortie de la fibre présente une très bonne qualité optique.

De telles fibres comportant une surface d'extrémité inclinée ont été utilisées récemment, de manière très limitée, dans le domaine médical. Cependant, de telles fibres optiques à extrémité inclinée n'ont jamais été utilisées pour le transport d'un rayonnement laser de puissance.

Lorsqu'on utilise une fibre telle que la fibre 1 ayant une extrémité de sortie 5 inclinée, on observe une inclinaison de l'axe du faisceau de sortie 4b d'un angle α' par rapport à l'axe 6 de la fibre optique ainsi qu'un accroissement de la divergence du faisceau à la sortie de la fibre optique.

L'inclinaison du faisceau dans un sens inverse de l'inclinaison de la surface d'extrémité 5 est obtenue du fait de la différence d'indice entre le coeur 2 de la fibre et le milieu ambiant dans lequel sort le faisceau 4b, combinée à l'inclinaison de la surface de sortie 5.

L'angle d'inclinaison α' du faisceau dépend de l'angle d'inclinaison α de la surface d'extrémité de la fibre et cet angle d'inclinaison augmente bien entendu avec l'angle d'inclinaison de la surface d'extrémité de la fibre. Cependant, de manière à limiter les pertes de rayonnement laser dans la fibre par renvoi d'une partie du rayonnement vers la source, et pour éviter l'apparition de points chauds dans certaines zones de la fibre, il est nécessaire de limiter l'angle α à une valeur généralement comprise entre 30 et 40°, l'angle d'inclinaison de la fibre pouvant être, de manière avantageuse, voisin de 33°.

Dans le cas d'un faisceau ayant un angle de divergence initial de 25° et d'une surface d'extrémité de la fibre 5 inclinée d'un angle de 33°, l'angle d'inclinaison α' du faisceau 4b en sortie est voisin de 22°. L'angle de divergence du faisceau 4b à la sortie de la fibre est de 43°.

Malgré l'inclinaison limitée et l'augmentation de la divergence du faisceau à la sortie de la fibre, il est possible d'utiliser une fibre telle que la fibre 1 pour réaliser une tête de travail au laser à l'intérieur d'un tube, ne comportant aucun moyen optique de renvoi du faisceau laser tel qu'un miroir.

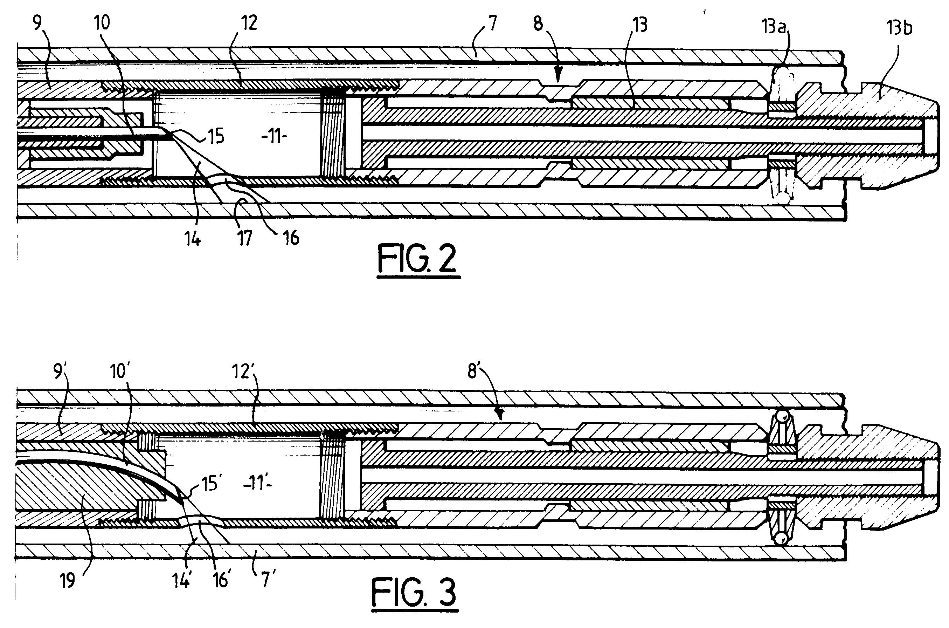

Sur la figure 2, on a représenté une tête de travail au laser désignée de manière générale par le repère 8 et comportant une fibre optique 10 ayant une surface d'extrémité inclinée disposée de manière à pouvoir mettre en oeuvre le procédé suivant l'invention à l'intérieur d'un tube 7.

Le tube 7 est par exemple un tube métallique d'un générateur de vapeur dans lequel on désire réaliser un traitement, par exemple de détensionnement, par chauffage de la paroi du tube par l'intérieur en utilisant un faisceau laser.

La tête de travail au laser 8 comporte un support tubulaire 9 dans lequel est fixée une fibre optique 10 suivant la direction axiale du support 9.

La fibre 10 est légèrement saillante par rapport à l'extrémité du support 9 représentée sur la figure 2 et débouche dans une chambre 11 délimitée par une chemise tubulaire 12 fixée par vissage à l'extrémité du support 9.

La partie d'extrémité du support 9, opposée à la chemise 12 représentée sur la figure 2, est reliée à un élément allongé réalisé sous la forme d'un conduit dans lequel la fibre 10 est fixée dans une disposition sensiblement axiale.

L'élément allongé permet d'assurer le passage et la protection de la fibre dont l'extrémité opposée à l'extrémité pénétrant dans la chambre 11 est reliée à une source de rayonnement laser permettant l'alimentation de la fibre.

La partie d'extrémité 13 de la tête de travail 8, fixée à la seconde extrémité de la chemise 12 opposée à la première extrémité reliée au support 9, comporte en particulier des moyens de guidage 13a de la tête de travail au laser 8 à l'intérieur du tube 7 qui peuvent être constitués par exemple par un centreur à billes dans une disposition radiale fixé sur la tête 8 et venant en contact avec la surface intérieure du tube 7 pour assurer le maintien radial et le guidage de la tête de travail 8.

Les moyens de guidage 13a sont serrés contre la partie 13 de la tête de soudage par un embout d'extrémité 13b présentant une forme conique et permettant de faciliter l'introduction de la tête de travail au laser dans un tube.

L'extrémité de la fibre optique en saillie à l'intérieur de la chambre 11 délimitée par la chemise 12 comporte une surface d'extrémité 15 plane, polie et inclinée d'un angle α par rapport à l'axe longitudinal de la fibre 10.

La paroi de la chemise 12 est traversée par une ouverture 16.

Pour mettre en fonctionnement la tête de travail 8 à l'intérieur du tube 7, on alimente l'extrémité d'entrée de la fibre 10 en un faisceau laser de puissance qui est guidé par la fibre suivant toute sa longueur et qui pénètre dans la chambre 11 sous la forme d'un faisceau 14 dévié d'un angle α' par rapport à l'axe de la fibre optique 10 confondu avec l'axe de la tête de travail 8 elle-même placée dans une disposition coaxiale à l'intérieur du tube 7.

De cette manière, le faisceau 14 est dirigé vers la paroi intérieure du tube 7, sans qu'on ait à utiliser de miroir de renvoi du faisceau laser 14.

L'ouverture 16 traversant la paroi de la chemise 12 est disposée par rapport à l'extrémité 15 de la fibre optique de manière à permettre le passage du faisceau 14; l'ouverture 16 présente un diamètre assurant le passage de la totalité du faisceau 14, compte tenu de son angle de divergence.

Le faisceau 14 est incident sur la surface intérieure du tube 7, suivant une zone 17 dans laquelle le faisceau laser transmet son énergie à la paroi du tube 7.

Bien que le faisceau laser 14 ne soit pas focalisé et rencontre la surface intérieure du tube suivant une zone 17 d'une certaine étendue, il est possible de réaliser des opérations telles qu'un chauffage localisé du tube 7, par exemple pour son détensionnement ou son traitement thermique ou encore une décontamination de la surface intérieure du tube 7.

En effet, la zone d'impact 17 du faisceau 14 présente un diamètre relativement important, par exemple de l'ordre de 8 millimètres.

Des moyens non représentés permettent la mise en circulation d'un gaz, par exemple un gaz inerte, dans la zone de travail du faisceau laser 14. On évite ainsi la projection de gouttes ou particules sur la fibre optique et on réalise l'entraînement des fumées produites dans la zone où s'effectue le chauffage.

Pour réaliser un balayage de la surface intérieure du tube 7, on peut déplacer la tête 8 en translation suivant l'axe du tube 7 et/ou en rotation autour de cet axe.

La fibre 10 est donc entraînée en rotation et, pour éviter une torsion de la fibre 10 dont l'extrémité d'entrée est reliée à la source de rayonnement laser, on prévoit éventuellement une transmission du rayonnement laser à travers un joint tournant, comme il sera expliqué plus loin.

Du fait que l'angle d'inclinaison de la surface d'extrémité de la fibre optique utilisée dans une tête de travail au laser du dispositif suivant l'invention doit être fixé à une valeur située dans un intervalle relativement étroit, pour obtenir un bon rendement et pour éviter des points chauds sur la fibre, il n'est généralement pas possible d'augmenter la déviation du faisceau laser en sortie de la fibre au-delà d'une limite de l'ordre de 30°. En outre, lorsqu'on augmente la déviation en augmentant l'inclinaison de la surface d'extrémité de la fibre, on augmente également la divergence du faisceau et donc la dispersion de l'énergie du rayonnement laser.

Sur la figure 3, on a représenté une tête de travail au laser analogue à la tête 8 représentée sur la figure 2 et permettant d'obtenir une plus forte inclinaison du faisceau laser à la sortie de la fibre par rapport à l'axe de la tête sans augmenter l'angle d'inclinaison de la surface d'extrémité de la fibre optique.

Les éléments correspondants sur les figure 2 et 3 portent les mêmes repères avec toutefois le signe '(prime) pour les éléments représentés sur la figure 3.

La fibre optique 10' de la tête de travail 8' est sensiblement identique à la fibre 10 de la tête 8 représentée sur la figure 2. En particulier, la surface d'extrémité 15' de la fibre 10' est inclinée du même angle α par rapport à l'axe de la fibre 10' que la surface d'extrémité 15 de la fibre 10.

La fibre 10' est fixée à l'intérieur d'une pièce 19 elle-même fixée à l'intérieur du support 9' de la tête 8', de manière que la partie d'extrémité de la fibre 10' soit inclinée en direction de l'ouverture 16' de la chemise 12' de la tête 8' délimitant la chambre 11'.

Du fait de la réalisation de la fibre 10' en un matériau ayant une souplesse limitée, on ne peut imposer qu'une faible courbure de la partie d'extrémité de la fibre 10'. Cependant, la combinaison de la flexion de la partie d'extrémité de la fibre 10' et de l'inclinaison de la surface d'extrémité 15' de la fibre 10' débouchant à l'intérieur de la chambre 11' permet d'obtenir une inclinaison résultante du faisceau laser 14' sortant de la fibre sensiblement supérieure à l'inclinaison du faisceau laser 14 sortant de la fibre 10, comme représenté sur la figure 2.

On obtient donc une inclinaison accrue du faisceau 14' par rapport à l'axe de la tête de travail 8'. Ce résultat est obtenu sans augmenter la divergence du faisceau laser à la sortie de la fibre.

Du fait d'une orientation du faisceau 14' plus proche de la normale à la surface intérieure du tube 7' et du rapprochement de l'extrémité de la fibre 10' de la surface intérieure du tube 7', on diminue la dimension de la zone d'impact du faisceau laser 14' sur la surface intérieure du tube 7'. On opère donc dans des conditions plus favorables en ce qui concerne la concentration de l'énergie du rayonnement laser sur une partie de la surface du tube 7'.

Sur la figure 4, on a représenté de manière très schématique un dispositif de travail au laser suivant l'invention comportant un joint tournant.

Le dispositif de travail au laser comporte une source de rayonnement laser 20 à laquelle est reliée une fibre optique fixe 21, de manière que l'extrémité d'entrée de la fibre 21 reliée à la source 20 reçoive un rayonnement laser, lorsque la source 20 est mise en fonctionnement.

Dans le prolongement axial de la fibre 21 est disposée une seconde fibre optique 22 dont le diamètre est sensiblement supérieur au diamètre de la fibre optique fixe 21. Par exemple, le diamètre de la fibre 22 peut être de l'ordre de 1000 µm lorsque le diamètre de la fibre optique 21 est de 600 µm.

La fibre 22 est fixée de manière amovible à l'intérieur d'une tête de travail au laser rotative telle que la tête de travail au laser représentée sur la figure 2 ou sur la figure 3.

La fibre 22 est donc montée rotative, de manière à pouvoir tourner autour de son axe sur toute sa longeur. La fibre 22 constitue une pièce d'usure qui peut être remplacée facilement, après une certaine durée d'utilisation du dispositif.

La surface d'extrémité de sortie 25 de la fibre 22 de forme plane est inclinée par rapport à l'axe de la fibre 22.

Lorsque la source de rayonnement laser 20 est mise en fonctionnement, la fibre 21 est alimentée de manière qu'un faisceau laser 23, légèrement divergent, sorte par l'extrémité de la fibre 21.

Du fait de la différence de diamètre entre la fibre 21 et la fibre 22, le faisceau 23 pénètre entièrement par l'extrémité de la fibre 22 et peut être transmis de manière intégrale par la fibre 22 jusqu'à la surface de sortie 25 de la fibre inclinée par rapport à son axe. On obtient alors un faisceau en sortie de la fibre 22 incliné par rapport à l'axe de cette fibre.

Les parties d'extrémité des fibres 21 et 22 situées en vis-à-vis constituent un joint tournant 24. En effet, lorsque la fibre 22 fixée dans la tête de soudage est mise en rotation autour de son axe (flèche 26), le rayonnement laser passe intégralement de la fibre fixe 21 à la fibre rotative 22 et la fibre 22 qui est mise en rotation autour de son axe dans son ensemble ne subit aucune torsion.

L'invention permet donc de réaliser le balayage d'une surface peu accessible, par exemple de la surface intérieure d'un tube de faible diamètre par un faisceau laser sans utiliser de moyens optiques de déviation ou de renvoi du faisceau.

En outre, le balayage de la surface sur laquelle on réalise le travail au laser peut être obtenu sans faire subir de torsion à la fibre optique de transmission du rayonnement laser.

L'invention ne se limite pas aux modes de réalisation qui ont été décrits.

C'est ainsi qu'on peut imaginer d'utiliser des fibres optiques ayant des caractéristiques différentes de celles qui ont été indiquées dans la description et des moyens différents d'une flexion de l'extrémité de la fibre, pour accroître l'effet de déviation du faisceau laser à la sortie de la fibre.

Enfin, le procédé et le dispositif suivant l'invention peuvent être utilisés pour réaliser un travail au laser sur une surface métallique différente de la surface intérieure d'un tube de faible diamètre.

## Revendications

**1.-** Procédé de travail au laser sur une surface métallique (7, 7') peu accessible consistant à faire passer un faisceau laser (14, 14') d'une source de rayonnement laser de puissance (20) à une zone (11, 11') proche de la surface (7, 7') à traiter à l'intérieur d'une fibre optique (10, 10') et à diriger le faisceau laser (14, 14') sur la surface à traiter, caractérisé par le fait que le faisceau laser (14, 14') pénètre dans la zone (11, 11') proche de la surface métallique (7, 7') en traversant une surface d'extrémité (15, 15') de la fibre optique (10, 10') sensiblement plane et inclinée d'un angle a non nul par rapport à un plan perpendiculaire à l'axe de la fibre optique (10, 10').

**2.-** Procédé suivant la revendication 1, caractérisé par le fait que l'angle d'inclinaison a de la surface d'extrémité (15, 15') de la fibre optique (10, 10') est compris entre 30 et 40°.

**3.-** Procédé suivant la revendication 2, caractérisé par le fait que l'angle a d'inclinaison de la surface d'extrémité (15, 15') de la fibre optique (10, 10') est voisin de 33°.

**4.-** Procédé suivant l'une quelconque des revendications 1 à 3, caractérisé par le fait que le travail au laser sur la surface métallique (7, 7') est l'une au moins des opérations suivantes : chauffage d'une paroi métallique (7, 7'), détensionnement d'une paroi métallique (7, 7'), dépôt d'un revêtement sur une surface métallique, soudage, décontamination d'une surface métallique radio-active.

**5.-** Procédé suivant l'une quelconque des revendications 1 à 4, caractérisé par le fait que la surface métallique peu accessible est la surface intérieure d'un tube (7, 7').

**6.-** Procédé suivant l'une quelconque des revendications 1 à 5, caractérisé par le fait qu'on met un gaz en circulation dans une zone de travail du faisceau laser (14, 14').

**7.-** Dispositif de travail au laser sur une surface peu accessible (7, 7'), comportant une source de rayonnement laser de puissance (20) et un fibre optique (10, 10') ayant une extrémité d'entrée disposée pour recevoir un rayonnement laser de la source (20) et une extrémité de sortie du rayonnement laser (14, 14') caractérisé par le fait que l'extrémité de sortie de la fibre optique (10, 10') est délimitée par une surface (15, 15') sensiblement plane et inclinée d'un angle a non nul par rapport à un plan perpendiculaire à l'axe de la fibre optique (10, 10').

**8.-** Dispositif suivant la revendication 7, caractérisé par le fait qu'une partie d'extrémité de la fibre optique (10') voisine de l'extrémité de sortie de la fibre (10)' est courbée de manière à augmenter l'angle d'inclinaison de la surface d'extrémité (15') de la fibre optique (10') par rapport à la direction de l'axe de la fibre (10') dans une partie droite de la fibre (10').

**9.-** Dispositif suivant l'une quelconque des revendications 7 et 8, caractérisé par le fait qu'une partie au moins de la fibre optique (10, 10') comprenant l'extrémité de sortie (15, 15') de la fibre est disposée à l'intérieur d'une tête de travail au laser (8, 8') comportant une chambre (11, 11') dans laquelle débouche l'extrémité de sortie (15, 15') de la fibre optique (10, 10').

**10.-** Dispositif suivant la revendication 9, pour effectuer un travail au laser à l'intérieur d'un tube (7, 7') caractérisé par le fait que la chambre (11, 11') est délimitée par une chemise tubulaire (12, 12') fixée à l'extrémité d'un support (9, 9') de la tête de travail au laser (8, 8') dont la paroi est percée d'une ouverture (16, 16') de passage du faisceau laser (14, 14') sortant de la fibre optique (10, 10').

**11.-** Dispositif suivant la revendication 10, caractérisé par le fait que la fibre optique (10, 10') comporte un premier tronçon fixe (21) relié à la source de rayonnement laser de puissance (20) et un second tronçon (22) fixé dans la tête de travail au laser (8, 8'), le premier tronçon (21) ayant une extrémité opposée à la source (20) disposée en vis-à-vis d'une extrémité d'entrée du second tronçon (22) de la fibre optique opposée à son extrémité de sortie du faisceau laser dans la chambre de la tête de soudage (8, 8') et le premier tronçon (21) de la fibre optique (10, 10') présentant un diamètre inférieur au diamètre du second tronçon (22) de la fibre optique, de manière qu'un faisceau laser (23) puisse être transmis sans contact du premier tronçon (21) au second tronçon (22) fixé dans la tête de travail au laser (8, 8').

**12.-** Dispositif selon la revendication 11, caractérisé par le fait que le second tronçon (22) de la fibre optique (10, 10') est monté rotatif de manière à pouvoir tourner autour de son axe sur toute sa longueur et fixé de manière amovible dans la tête de travail au laser (8, 8') pour son remplacement en cas d'usure.
